# EUROPEAN PATENT APPLICATION

(11) **EP 1 510 912 A2**
(43) Date of publication of application: **02.03.2005**
(21) Application number: 04255230.7
(22) Date of filing: 28.08.2004
(51) Int. Cl.: G06F 3/12

(54) **Printer control program, document operation terminal, document processing system and method of creating printing data**

(30) Priority: 29.08.2003 JP 2003307099; 22.07.2004 JP 2004214544
(71) Applicant: Seiko Epson Corporation, Shinjuku-ku, Tokyo 163-0811 (JP)
(72) Inventor: Kitada, Naruhide, c/o Seiko Epson Corporation, Suwa-shi Nagano-ken 392-8502 (JP); Takahashi, Yusuke, c/o Seiko Epson Corporation, Suwa-shi Nagano-ken 392-8502 (JP); Arazaki, Shinichi, c/o Seiko Epson Corporation, Suwa-shi Nagano-ken 392-8502 (JP)
(74) Representative: Cloughley, Peter Andrew

(57) **Abstract**

A printer control program which is capable of utilizing an existing printing system or a general document operation application software as it is and reducing a printing start time, a document operation terminal, a document processing system, and a method of creating printing data. Operation situations of a document operation application software 40 are monitored by a printer driver 100 which works simultaneously with the document operation application software 40. Certain operation information is acquired during the document operation of the document operation application software 40. Printing data of document data is previously created based on the acquired operation information. Therefore, before a printing instruction is made, an overall rendering of data is completed, such that it is possible to drastically reduce a printing start time.

## Description

### [Technical Field]

The present invention relates to a printer control program which is a device driver for printer and is incorporated into a document operation terminal of a personal computer (PC). More specifically, the present invention relates to a printer control program which is capable of reducing a printing start time, a document operation terminal, a document processing system, and a method of creating printing data.

### [Background Art]

Generally, document data to be created by a document operation terminal of a personal computer (PC) or the like cannot be printed in a printer as it is. Thus, document data is converted into printing data made of raster image data in which color information is arranged in every dot, such that a printing is performed based on printing data.

Such a conversion process from document data to raster image data is generally referred to as a rendering process. For example, in a general ink jet printer, the rendering process is performed by a printer control program previously incorporated in an operating system (OS) of the document operation terminal.

Further, in the document operation terminal, after a document creation is completed, a button for a printing instruction of application software, such as word processor software, on which a user is operating the document, is pressed. And then, the printer control program performs such a rendering process. Thus, there is a problem in that it takes much time for the printer to start the printing due to a time required for the rendering process. In particular, in the case in which a data size is large due to the document containing many images, or the ability for processing information of the document operation terminal itself is low, the problem drastically appears.

For this reason, for example, in Japanese Unexamined Patent Application Publication No. 2000-267827 and Japanese Unexamined Patent Application No. 11-31054, methods for reducing an actual printing start time in a printer are suggested. In such methods, application software of a document operation terminal (a client device) sequentially transmits document data to the printer (a printing device) simultaneously with creating a document. Subsequently, the printer receives document data to convert it into image data suitable for printing and then prints it using the previously created image data according to a printing command and conditions that are transmitted after completely creating the document.

### [Disclosure of the Invention]

### [Problems to be Solved by the Invention]

However, in such conventional arts, a function or a structure for sequentially transmitting a part of document data in the course of creation to the printer, simultaneously with the document creation (operation), is required for document operation application software. Accordingly, general document operation application software such as a word processor or an editor which is already placed on sale or is actually installed and used in the document operation terminal can not exhibit such function.

Further, in order to enjoy such function, an overall printing system leading to the printer or various printing control software such as the printer control program, as well as the application software, is needed to be newly constructed, which results in a problem in that a manufacturing cost for development or implementation increases.

Therefore, the present invention is designed to solve such problems, and it is an object of the present invention to provide a new printer control program which is capable of reducing a printing start time, a document operation terminal, a document processing system, and a method of creating printing data.

Further, it is another object of the present invention to provide a new printer control program which is capable of utilizing an existing printing system or a general document operation application software as it is and reducing a printing start time, a document operation terminal, a document processing system, and a method of creating printing data.

### [Means for Solving the Problems]

[First Invention] In order to solve the problems, according to a first invention, there is provided a printer control program which works simultaneously with document operation software utilizing a printing function by time-sharing tasks to be executed or distributing execution locations, in which a computer is made to function as: operation information acquiring means for acquiring operation information of the software during the operation of the software; and printing data creating means for creating printing data of a document to be created in the software, based on operation information acquired by the operation information acquiring means.

Therefore, during the operation of the document operation software which handles an electronic file, such as a word processor or an image viewer, that is, at a certain period between a start and an end of a process of the document operation software, it is possible to acquire data constituting the document and precedently start the creation of the printing data (hereinafter, in the present embodiment, the creation of printing data is referred to as 'rendering', like the conventional arts). Thus, it is possible to omit partially or overall a rendering process conventionally performed after the completion of the document creation.

As a result, since it becomes possible to drastically reduce or omit the time required for the rendering process after the completion of the document creation, it is possible to drastically reduce the time between the data transmission to the printer and a first print out in the printer.

Further, since such functions can be exhibited by only a software for controlling the printer, it is possible to utilize an existing printing system or a general document operation application software as it is, and further it is possible to suppress a developing cost or an introducing cost to a minimum.

Moreover, 'the document operation software utilizing a printing function' disclosed in the specification includes a software which does not create new document data, such as an image viewing software exclusively used for image viewing, as well as a software for creating new document data by an operation of a user, such as a word processor or an editor (hereinafter, this is also applied to 'a printer control program', 'a document operation terminal', 'a document processing system' and 'a method of creating printing data' ) .

[Second Invention] According to a second invention, there is provided a printer control program which works simultaneously with document operation software utilizing a printing function, in which a computer is made to function as: operation information acquiring means for acquiring operation information of the software during the operation of the software; printing data creating means for creating printing data of a document to be created in the software, based on operation information acquired by the operation information acquiring means; and rendering information storing means for storing respective subject matters of printing data created in the printing data creating means as they are.

Therefore, the respective subject matters of printing data created in the printing data creating means are stored in the rendering information storing means in a rendered state. As a result, in addition to effects of the first invention, it is possible to use the rendered subject matters stored in the rendering information storing means as they are, when a rendering of the same data is required afterward.

As a result, since it is not necessary to perform the rendering of the same data again, it becomes possible to create printing data at a shorter time.

[Third Invention] According to a third invention, there is provided a printer control program which works simultaneously with document operation software utilizing a printing function, in which a computer is made to function as: operation information acquiring means for acquiring operation information of the software during the operation of the software; operation information selecting means for selecting predetermined operation information from the operation information acquired by the operation information acquiring means; and printing data creating means for creating printing data of a document to be created in the software, based on operation information selected by the operation information selecting means.

Therefore, predetermined operation information can be selected from the operation information acquired by the operation information acquiring means by the operation information selecting means, and selected operation information can be delivered to the printing data creating means. As a result, in addition to effects of the first invention, a type of operation information to be acquired can be suitably switched according to a type of the application software, not being fixed according to a setting of a user. For example, it becomes possible to give a priority over a type or a content of operation information and perform a subsequent process such as creation of operation information according to the utilization situation of the application software. Further, it becomes possible to switch a list to be monitored. In addition, it becomes possible to raise a priority to a document of which a frequency to be handled is high and drop priorities of other documents.

[Fourth Invention] According to a fourth invention, there is provided a printer control program which works simultaneously with document operation software utilizing a printing function, in which a computer is made to function as: operation information acquiring means for acquiring operation information of the software during the operation of the software; CPU load information acquiring means for acquiring load information of a CPU of the computer on which the software works; operation information selecting means for selecting predetermined operation information from the operation information acquired by the operation information acquiring means, based on the load information of the CPU acquired by the CPU load information acquiring means; and printing data creating means for creating printing data of a document to be created in the software, based on operation information selected by the operation information selecting means.

Therefore, the CPU load information acquiring means acquires load information of the CPU of the computer on which the software works and the operation information selecting means selects predetermined operation information from the operation information acquired by the operation information acquiring means based on the load information of the CPU. As a result, in addition to the effects of the first invention, it is possible to avoid an increase of the CPU load required for the acquisition of the operation information and the rendering process during the operation.

That is, in the case in which the rendering process (the creation process of printing data) based on the acquired operation information is performed by the CPU of the computer on which the software works, the present invention changes the types of operation information of the monitored object according to the load situation of the CPU (the utilization frequency). For example, if the utilization frequency of the CPU is low, as described in the next fifth invention, all operation information (ReadFile, OleLoadPictureFile, WriteFile, TextOut, MoveToEx, LineTo, and Ellipse) regarding the API (Application Program Interface) becomes the objects to be monitored. The API is a program interface which the operating system (hereinafter, suitably referred to as an OS (Operating System)) opens to the application software. Meanwhile, if the utilization frequency of the CPU is higher, among operation information regarding the API, operation information (for example, WriteFile and Ellipse) to which the CPU load is large is excluded from the monitored objects. Further, if the utilization frequency of the CPU is still higher, among operation information regarding the API, operation information (for example, TextOut, MoveToEx and'LineTo) to which the CPU load is secondly large is excluded from the monitored objects. As a result, it is possible to avoid effectively an increase of the CPU load due to the acquisition of operation information and the rendering process during the operation.

[Fifth Invention] According to a fifth invention, there is provided the printer control program according to any one of the first to fourth inventions, in which the software is application software which utilizes an operating system, and operation information of the software to be acquired by the operation information acquiring means is information regarding operations of the application software to the operating system.

That is, like the first to fourth inventions, in the present invention, operation information to be acquired by the operation information acquiring means is operation information regarding the OS among operation information of the application software. For example, operation information regarding a program interface such as the API (Application Programming Interface) called so as to utilize a part of the function of the OS may be included.

In other words, a general document operation application software (a word processor software) such as 'Word' (Registered Trademark) of Microsoft Corporation works on the OS such as Windows (Registered Trademark) of the same corporation, in which, when performing a plotting, a plotting is performed in a monitor using a plotting API such as a GDI (Graphical Device Interface) or a DDI (Device Drive Interface) which the OS has as a standard. The present invention is constructed to monitor the working situations of the interface for application software which the OS has and acquire (hereinafter, suitably referred to as 'hook') the working situations to perform the rendering process during the document operation.

Therefore, similar to the first to fourth inventions, it is possible to drastically reduce the time up to the first print out and further it is possible to utilize the existing printing system or the general document operation application software as it is. Thus, it is possible to suppress the developing cost or the developing time for obtaining the present function to a minimum.

Besides, the present invention uses a general framework of an environment in which the application software such as the OS is used. Thus, the present invention can correspond to all the document operation application software utilizing the environment. For example, in UNIX (Registered Trademark) or the like, an environment which provides a GUI (Graphic User Interface) of X-Windows (Registered Trademark) other than the OS also exists. If a framework is used to acquire information even from an environment accompanying an OS, it is possible to obtain the same effects as those of the above-mentioned Windows (Registered Trademark).

Moreover, 'the operating system' described in the specification includes an environment for executing the document operation application software corresponding to the operating system, for example, a general OS such as above-mentioned Windows (Registered Trademark) or Linux (Registered Trademark), or an OS comprising a plotting module such as 'X-Windows' (Registered Trademark) or 'MicroWindows' (Registered Trademark) (the same is applied to inventions regarding 'the printer control program', 'the document operation terminal', 'the document processing system' and 'the method of creating printing data').

[Sixth Invention] According to a sixth invention, there is provided the printer control program according to any one of the first to fourth inventions, in which the software is application software utilizing an operating system, and operation information of the software to be acquired by the operation information acquiring means is information regarding command operations from the operating system to the software.

That is, like the fifth invention, the present invention acquires information regarding document operation command operations, which the user executes to the application software, for example, command operations previously set so as to freely select, such as 'copy', 'cut' or 'attachment', as operation information, not operation information of the application software to the OS, and performs the rendering process to the acquired operation information.

Therefore, similarly to the fifth invention, it is possible to drastically reduce the time up to the first print out, and it is possible to utilize the existing printing system or the general document operation application software as it is. As a result, it is possible to suppress the developing cost or the developing time for obtaining the present function to a minimum.

Besides, in the case in which an eminent word processor software such as 'Word' (Registered Trademark) of Microsoft Corporation is used as the document operation application software to be applied, it is possible to recognize and grasp the operations of the user as high quality content. As a result, it becomes possible to acquire the document content more accurately than the above-mentioned fifth invention.

Further, in the case in which, for example, 'Office' (Registered Trademark) of Microsoft Corporation is used as the document operation application software to be applied, similarly, it is possible to implement by acquiring application events on the 'Office' (Registered Trademark). For example, it is possible to acquire the events in the application by a method described in the URL described below.
http://msdn.microsoft.com/library/default.asp?url=/library/en us/odc vsto2003 ta/html/odc VSTHookWrd.asp

By checking events of Documents object among them, it is possible to easily detect commands such as Add (newly create) or Open (open document).

[Seventh Invention] According to a seventh invention, there is provided the printer control program according to the third invention, in which information regarding command operations from the operating system to the software is information regarding file operations of the software.

That is, the present invention acquires information of file operations which largely change the content of a document to be created by the user, that is, file operations when the user begins to edit a certain file or a certain image file is inserted into the document to be created, as information regarding command operations to the software.

Information regarding such operations is information regarding the operations of the content which is difficult to change, as compared with information such as character inputs or the like in which errors are repetitively corrected. That is, the subject matters obtained by performing the rendering process to information acquired by such a manner are hardly useless, and then it is not necessary to store useless resources in large quantities. Thus, even in the computer having a relatively low information processing ability, it is possible to obtain the same effects as those of the third invention.

[Eighth Invention] According to an eighth invention, there is provided the printer control program according to any one of the first to fourth inventions, in which the software is application software utilizing an operating system, and operation information of the software to be acquired by the operation information acquiring means is information regarding input operations from an input device of hardware, with which the software works cooperatively, with respect to the operating system.

That is, the present invention acquires operation information regarding the input operations which the user directly executes using the input device, such as a keyboard or a mouse, with respect to the hardware (the computer), not operating information which is recognized and grasped by the application software, such as operation information with respect to the OS or operation commands with respect to the application software, as the above-mentioned inventions, and performs the rendering process thereto.

Therefore, like the first to fourth inventions, the effect such as the reduction of the time up to the first print out or the reduction of the developing cost can be exhibited. Further, in the present invention, by hooking electrical input signals to be generated from the input device, it becomes possible to acquire operation information, which is executed by the user, easily and surely from a technical point of view with a simplified structure.

Moreover, in Windows (Registered Trademark), it is possible to acquire the operations of the input device such as the keyboard or the mouse as the events (key operations and mouse operations) of Windows (Registered Trademark). For example, it is possible to acquire operation information from the input device to the OS using a technique which is referred to as a global hook of Windows (Registered Trademark) described in the URL such as http://hp.vector.co.jp/authors/VA016117/hook.html.

[Ninth Invention] According to a ninth invention, there is provided a document operation terminal communicably connected to a printer, which comprises document operation means for creating a document to be printed on the printer, operation information acquiring means for acquiring operation information of the document operation means during the operation of the document operation means, printing data creating means for creating printing data of the document created in the document operation means, based on operation information acquired by the operation information acquiring means, and data transmitting means for transmitting printing data created in the printing data creating means to the printer.

Therefore, like the first invention, it is possible to start precedently the rendering process, and thus it is possible to omit partially or overall a rendering process conventionally performed after the completion of the document creation.

As a result, it becomes possible to drastically reduce or omit the time required for the rendering process after the completion of the document creation. Thus, it is possible to drastically reduce the time from the data transmission to the printer by the data transmitting means up to the first print out in the printer.

Further, it becomes possible to implement the respective means with the hardware by means of dedicated circuits, other than an implementation of the software like the first invention. In this case, it becomes possible to perform the rendering process at a higher speed than the implementation of the software.

[Tenth Invention] According to a tenth invention, there is provided a document operation terminal communicably connected to a printer, which comprises document operation means for creating a document to be printed on the printer, operation information acquiring means for acquiring operation information of the document operation means during the operation of the document operation means, printing data creating means for creating printing data of the document created in the document operation means, based on operation information acquired by the operation information acquiring means, rendering information storing means for storing respective subject matters of printing data created in the printing data creating means as they are, and data transmitting means for transmitting printing data created in the printing data creating means to the printer.

Therefore, it is possible to obtain the same effects as those of the ninth invention, and further, like the second invention, it is possible to store the respective subject matters of printing data created in the printing data creating means by means of the rendering information storing means in the rendered state. Thus, when the rendering process of the same data is required in the subsequent processes, it is possible to utilize the rendered subject matters stored in the rendering information storing means as they are. As a result, since the rendering process is not required for the same data, it becomes possible to create printing data at a shorter time.

[Eleventh Invention] According to an eleventh invention, there is provided a document operation terminal communicably connected to a printer, which comprises document operation means for creating a document to be printed on the printer, operation information acquiring means for acquiring operation information of the document operation means during the operation of the document operation means, operation information selecting means for selecting predetermined operation information from the operation information acquired by the operation information acquiring means, printing data creating means for creating printing data of the document created in the document operation means, based on operation information selected by the operation information selecting means, and data transmitting means for transmitting printing data created in the printing data creating means to the printer.

Therefore, similarly to the third invention, the present invention selects predetermined operation information from the operation information acquired by the operation information acquiring means by the operation information selecting means, and delivers the selected operation information to the printing data creating means. As a result, in addition to the effects of the ninth invention, it is possible to switch optimally a type of operation information to be acquired according to a type of the application software without fixing according to a setting of a user.

[Twelfth Invention] According to a twelfth invention, there is provided a document operation terminal communicably connected to a printer, which comprises document operation means for creating a document to be printed on the printer, operation information acquiring means for acquiring operation information of the document operation means during the operation of the document operation means, CPU load information acquiring means for acquiring load information of a CPU of a computer which implements the document operation means, operation information selecting means for selecting predetermined operation information from the operation information acquired by the operation information acquiring means, based on the load information of the CPU acquired by the CPU load information acquiring means, printing data creating means for creating printing data of the document created in the document operation means, based on operation information selected by the operation information selecting means, and data transmitting means for transmitting printing data created in the printing data creating means to the printer.

Therefore, like the fourth invention, the CPU load information acquiring means acquires load information of the CPU of the computer on which the software works and the operation information selecting means selects predetermined operation information from the operation information acquired by the operation information acquiring means based on the load information of the CPU. As a result, in addition to the effects of the first invention, it is possible to avoid an increase of the CPU load required for. the acquisition of the operation information and the rendering process during the operation.

[Thirteenth Invention] According to a thirteenth invention, there is provided the document operation terminal according to any one of the ninth to twelfth inventions, in which the document operation means is application software which utilizes an operating system, and operation information of the software to be acquired by the operation information acquiring means is information regarding operations of the application software to the operating system.

Therefore, like the ninth to twelfth inventions, it is possible to drastically reduce the time up to the first print out, and like the fifth invention, it is possible to utilize the existing printing system or the general document operation application software as it is. As a result, it becomes possible to suppress the developing cost or the developing time for obtaining the present function to a minimum.

[Fourteenth Invention] According to a fourteenth invention, there is provided the document operation terminal according to any one of the ninth to twelfth inventions, in which the document operation means is application software utilizing an operating system, and operation information of the software to be acquired by the operation information acquiring means is information regarding command operations from the operating system to the software.

Therefore, it is possible to obtain the same effects as those of the ninth to twelfth inventions and the sixth invention.

[Fifteenth Invention] According to a fifteenth invention, there is provided the document operation terminal according to the eleventh invention, in which information regarding command operations from the operating system to the software is information regarding file operations of the software.

Therefore, it is possible to obtain the same effects as those of the eleventh invention and the seventh invention.

[Sixteenth Invention] According to a sixteenth invention, there is provided the document operation terminal according to any one of the ninth to twelfth inventions, in which the document operation means is application software utilizing an operating system, and operation information of the software to be acquired by the operation information acquiring means is information regarding input operations from an input device of hardware, with which the software works cooperatively, with respect to the operating system.

Therefore, it is possible to obtain the same effects as those of the ninth to twelfth inventions and the eighth invention.

[Seventeenth Invention] According to a seventeenth invention, there is provided a document processing system comprising a printer and a document operation terminal utilizing the printer, in which the document operation terminal comprises document operation means for creating a document to be printed on the printer, operation information acquiring means for acquiring operation information of the document operation means during the operation of the document operation means, printing data creating means for creating printing data of the document created in the document operation means, based on operation information acquired by the operation information acquiring means, and data transmitting means for transmitting printing data created in the printing data creating means to the printer.

Therefore, like the first invention, it is possible to start precedently the rendering process, and thus it is possible to omit partially or overall a rendering process conventionally performed after the completion of the document creation.

As a result, it becomes possible to drastically reduce or omit the time required for the rendering process after the completion of the document creation. Thus, it is possible to drastically reduce the time from the data transmission to the printer by the data transmitting means up to the first print out in the printer.

Further, it becomes possible to implement the respective means with the hardware by means of dedicated circuits, other than an implementation of the software like the first invention. In this case, it becomes possible to perform the rendering process at a higher speed than the implementation of the software.

[Eighteenth Invention] According to an eighteenth invention, there is provided a method of creating printing data of a document to be created in document operation software utilizing a printing function, in which a state of the document creation by the software is monitored, predetermined operation information is acquired during the document creation by the software, and printing data of the document in the course of creation in the software is previously created based on acquired operation information before a printing instruction is given.

Therefore, like the first invention, it is possible to acquire data constituting the document during the operation of the document operation software and start precedently the rendering process. Thus, it is possible to omit partially or overall the rendering process which is conventionally performed after the completion of the document creation.

As a result, it becomes possible to drastically reduce or omit the time required for the rendering process after the completion of the document creation. Thus, it is possible to drastically reduce the time from the data transmission to the printer up to the first print out in the printer.

[Nineteenth Invention] According to a nineteenth invention, in order to attempt to solve the above problems, there is provided a printer control program which resides in an environment in which a document operation application software runs and controls a printer, which comprises operation information acquiring means for acquiring operation information of the application software during the operation of the application software, and printing data creating means for creating printing data of a document operated on the document operation application software, based on operation information acquired by the operation information acquiring means.

Therefore, it is possible to acquire data constituting the document during the document operation of the application software and start precedently the process of creating printing data (hereinafter, in the present embodiment, the process of creating printing data is referred to as 'rendering'). Thus, it becomes possible to drastically reduce or omit the time of rendering which is conventionally performed after the workings of the document operation.

As a result, it is possible to drastically reduce the time up to the first print out and further it is possible to allow those functions to be exhibited only by the printer control program which is a software for controlling the printer. Thus, it is possible to utilize the existing printing system or the general document operation application software as it is. Further, it is possible to suppress the introducing cost to a minimum.

[Twentieth Invention] According to a twentieth invention, there is provided the printer control program according to the nineteenth invention, in which operation information of the application software to be acquired by the operation information acquiring means is operation information about the environment in which an operating system or the application software is used.

That is, like the first invention, operation information to be acquired by the operation information acquiring means is operation information regarding the OS among operation information of the application software. For example, operation information regarding an interface such as the API called so as to utilize a part of the function of the OS may be included.

In other words, a general document operation application software (a word processor software) such as 'Word' (Registered Trademark) of Microsoft Corporation works on the OS such as Windows (Registered Trademark) of the same corporation, in which, when performing a plotting, a plotting is performed in a monitor using a plotting API such as a GDI or a DDI which the OS has as a standard. The present invention is constructed to monitor the working situations of the interface for application software which the OS has and acquire (also referred to as hook) the working situations to perform the rendering process during the document operation.

Therefore, similar to the nineteenth invention, it is possible to drastically reduce the time up to the first print out and further it is possible to utilize the existing printing system or the general document operation application software as it is. Thus, it is possible to suppress the developing cost or the developing time for obtaining the present function to a minimum.

Besides, the present invention uses a general framework of an environment in which the application software such as the OS is used. Thus, the present invention can correspond to all the document operation application software utilizing the environment. For example, in UNIX (Registered Trademark) or the like, an environment which provides a GUI (Graphic User Interface) of X-Windows (Registered Trademark) other than the OS also exists. If a framework is used to acquire information even from an environment accompanying OS, it is possible to obtain the same effects as those of the above-mentioned Windows (Registered Trademark).

[Twenty-first Invention] According to a twenty-first invention, there is provided the printer control program according to the nineteenth invention, in which operation information of the application software to be acquired by the operation information acquiring means is operation information regarding commands for the document operation of the application software.

That is, like the twentieth invention, the present invention is constructed to acquire information regarding document operation command operations, which the user executes to the application software, for example, command operations previously set so as to freely select, such as 'copy', 'cut' or 'attachment', as operation information, not operation information of the application software to the OS, and perform the creation of printing data.

Therefore, like the first and second inventions, it is possible to drastically reduce the time up to the first print out and it is possible to utilize the existing printing system or the general document operation application software as it is. Thus, it becomes possible to suppress the developing cost or the developing time for obtaining the present function to a minimum.

Besides, in the case in which an eminent word processor, for example, 'Word' (Registered Trademark) of Microsoft Corporation is used as the document operation application software to be applied, it is possible to recognize and grasp the operations of the user as high quality content. Thus, it becomes possible to acquire the document content more accurately than the nineteenth invention or the twentieth invention.

[Twenty-second Invention] According to a twenty-second invention, there is provided the printer control program according to the nineteenth invention, in which operation information of the application software by the operation information acquiring means is operation information regarding input operations to an input device of hardware, with which the software works cooperatively.

That is, like the twentieth and twenty-first inventions, the present invention acquires operation information regarding the input operations which the user directly executes using the input device, such as a keyboard or a mouse, with respect to the hardware, not operating information which is recognized and grasped by the application software, such as operation information with respect to the OS or operation commands with respect to the application software, and performs the creation process of printing data.

Therefore, like the nineteenth to twenty-first inventions, the effect such as the reduction of the time up to the first print out or the reduction of the developing cost can be exhibited. Further, in the present invention, by hooking electrical input signals, it becomes possible to acquire operation information, which is executed by the user, easily and surely from a technical point of view with a simplified structure.

[Twenty-third Invention] According to a twenty-third invention, there is provided the printer control program according to the nineteenth invention, in which operation information of the application software to be acquired by the operation information acquiring means is information regarding file operations of the software.

That is, in the present invention, information of file operations which largely change the content of a document to be created by the user, that is, file operations when the user begins to edit a certain file or a certain image file is inserted into the document to be created are acquired. Information regarding such operations is information regarding the operations of the content which is difficult to change, as compared with information such as character inputs or the like in which errors are repetitively corrected. That is, the subject matters obtained by performing the rendering process to information acquired by such a manner are hardly useless, and then it is not necessary to store useless resources in large quantities. Thus, even in the computer having a relatively low information processing ability, it is possible to obtain the same effects as those of the above-mentioned inventions.

[Twenty-fourth Invention] According to a twenty-fourth invention, there is a method of creating printing data from a document data operated on a document operation application software using a printer control program, in which the printer control program resides in a computer on which the document operation application software works to monitor operation workings of the application software, and acquires certain operation information during the document operation of the application software to previously create printing data from document data.

Therefore, like the first invention, it is possible to acquire data constituting the document during the document operation of the application software to start precedently the process of the printing data creation. Thus, it becomes possible to drastically reduce or omit the time of the printing data process (the rendering process) which is conventionally performed after the document operation.

As a result, it is possible to drastically reduce the time up to the first print out and further it is possible to allow those functions to be exhibited only by the printer control program which is a software for controlling the printer. Thus, it is possible to utilize the existing printing system or the general document operation application software as it is. Further, it is possible to suppress the developing cost or the developing time to a minimum.

[Twenty-fifth Invention] According to a twenty-fifth invention, there is provided a document processing system comprising a document operation terminal on which a document operation application software works and a printer for performing a printing based on an instruction of the document operation terminal, which further comprises operation information acquiring means for acquiring operation information of the application software during the operation, and printing data creating means for creating printing data of a document to be printed on the printer, from operation information acquired by the operation information acquiring means.

That is, in the nineteenth to twenty-third inventions, those functions are implemented via the software, such as 'the printer control program', residing and working on the computer on which the document operation application software works. Alternatively, main functions, that is, the operation information acquiring means or the printing data creating means may be implemented by hardware which is comprised of dedicated logical circuits such as ASIC (Application Specific Integrated Circuit). Besides, if these functions are implemented by the hardware, it becomes possible to perform the respective functions at a higher speed and more accurately than those implemented by software.

Further, it becomes possible to adopt a construction of distributively arranging the operation information acquiring means and the printing data creating means, for example, arranging the operation information acquiring means in the side of the document operation terminal such as the personal computer (PC) and the printing data creating means in the side of the printer. As a result, it is possible to design an improvement of processing ability and processing efficiency in an overall system, as well as an improvement of reliability or availability according to the load distribution.

[Twenty-sixth Invention] According to a twenty-sixth invention, there is provided a document processing device comprising operation information acquiring means for acquiring operation information of a document operation application software during the operation, and printing data creating means for creating printing data of a document operated on the document operation application software, from operation information acquired by the operation information acquiring means.

Therefore, similar to the twenty-fifth invention, it is possible for a high speed process by means of hardware and distributive arrangement of the respective functions. As a result, it is possible to improve the processing ability and the processing efficiency as compared with an implementation by means of software.

Moreover, as described in the nineteenth to twenty-third inventions, in the case in which the respective functions are implemented with software, it becomes possible to drastically reduce a manufacturing cost as compared with one manufactured with a dedicated hardware, and further it is possible to easily perform the function improvement or alternation by means of version up. As a result, the implementation of software has undoubtedly more excellent advantages as compared with the implementation of hardware.

Embodiments of the present invention will now be described by way of further example only and with reference to the accompanying drawings, in which:-
Fig. 1 is a block diagram showing a printer control program and a document operation terminal according to the present invention.
Fig. 2 is a block diagram showing hardware constituting the document operation terminal according to the present invention.
Fig. 3 is a flowchart showing a process flow of the printer control program according to the present invention.
Fig. 4 is a view showing an example of an operation information list of a monitored object.
Fig. 5 is a view showing an example of monitored object operation information with reference to a CPU utilization frequency.
Fig. 6 is a view showing another example of an operation information list of a monitored object.
Fig. 7 is a view showing another example of monitored object operation information with reference to a CPU utilization frequency.
Fig. 8 is a view showing an example of storing information regarding application software.
Fig. 9 is a view showing an example of storing information regarding rendered subject matter data.
Fig. 10 is a flowchart showing a main flow of another process by the printer control program.
Fig. 11 is a flowchart showing another flow of another process by the printer control program.
Fig. 12 is a view showing an example of a recording medium on which the printer control program is recorded.

Hereinafter, a mode for carrying out the present invention will be described with reference to the attached drawings.

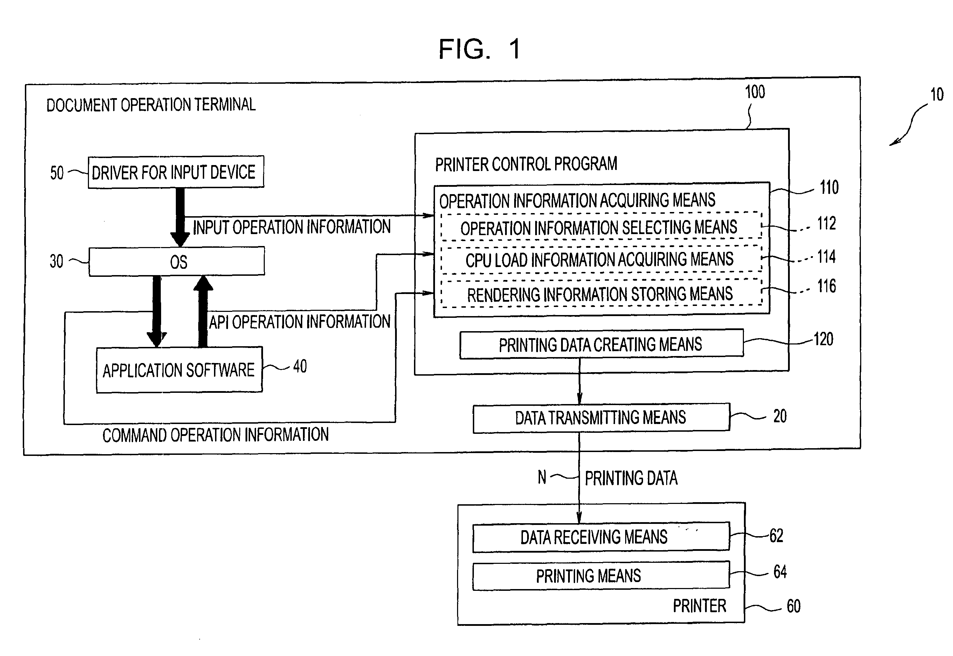

Fig. 1 shows an embodiment showing a printer control program 100 and a document operation terminal 10 provided therewith according to the present invention.

As shown in Fig. 1, the printer control program 100 is a printer control program (software) residing, together with an operating system 30, on a memory (hardware) of a computer on which a document operation application software 40 or the like works, to thereby control a printer 60. Like the conventional art, the printer control program 100 provides functions of converting document data created in a document operation terminal 10 into data having suitable shapes for different internal control methods of printers to be connected thereto, and transmitting converted printing data to the corresponding printer 60, simultaneously with a clarified printing instruction from a user, using data transmitting means 20.

Further, as shown in Fig. 1, the printer control program 100 comprises not only a means exhibiting such basic functions, but also operation information acquiring means 110 and printing data creating means (a rendering means) 120.

The operation information acquiring means 110 exhibits functions of acquiring operation information of the document operation application software 40 which works on the OS 30, and supplying acquired operation information to the printing data creating means 120.

That is, as operation information to be acquired by the operation information acquiring means 110, as shown in Fig. 1, input operation information from a driver 50 for input device, which recognizes input signals from an input device (not shown) such as a keyboard or a mouse, to the OS 30 is included. Further, command operation information regarding command operations from the OS 30 to the application software 40, and operation information regarding an API from the application software 40 to the OS 30 may be included. After one or overall operation information is suitably acquired by a real time by the operation information acquiring means 110, the acquired operation information is send to the printing data creating means 120.

Here, as specific operation information to be acquired by the operation information acquiring means 110, document operation commands which the user executes to the application software 40 are peculiar command operation information, such as 'copy' or 'cut', 'attachment', 'read file' and 'save file', which are previously set so as to freely select in every application software 40.

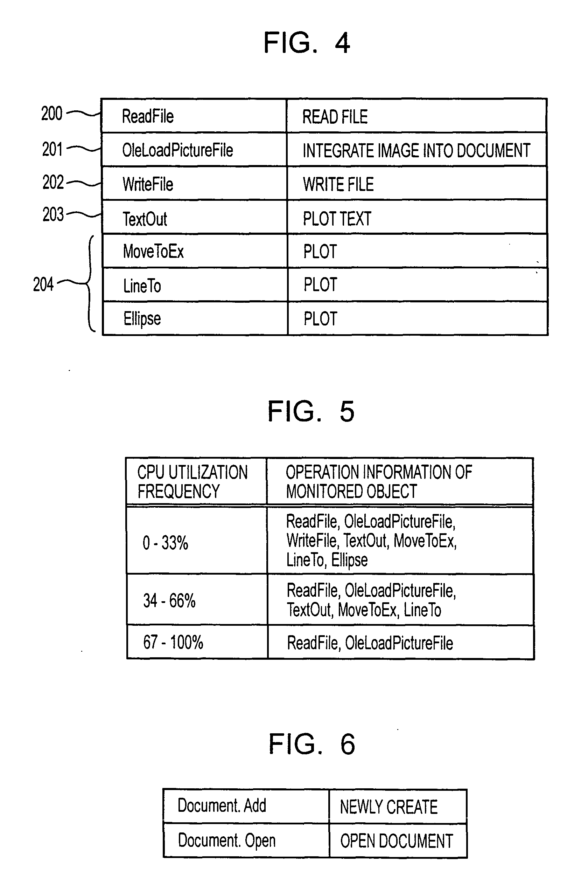

Further, operation information regarding the API includes the API of the OS to respective methods (ReadFile (read file) 200, OleLoadPictureFile (image is read into document) 201, WriteFile (write file) 202, TextOut (plot text) 203, MoveToEx, LineTo, Ellipse (plot) 204), as shown in Fig. 4. In addition, operation information regarding direct input from the input device (the driver for input device) may include input operation information from an input device such as a barcode reader or an OCR (Optical Character Reader), an OMR (Optical Mark Reader), a MICR (Magnetic Ink Character Reader), a digitizer, an image scanner, or a voice recognition device other than a keyboard or a mouse.

In addition, under an OS environment of, for example, Windows (Registered Trademark) NT, Windows (Registered Trademark) 2000, Windows (Registered Trademark) XP or the like, it becomes possible to acquire (hook) the API to an existing process with a method described below.
1. Acquire a privilege using OpenProcessToken, LookupPrivilegeValue ("SedebugPrivilege"), AdjustTokenPrivilege.
2. Acquire a process list using NtQuerySystemInformation.
3. Write his own code during the process using VirtualProtectEx and WriteProcessMomery.

Meanwhile, the printing data creating means 120 exhibits a function of creating printing data of the document, which is to be operated on the document operation application software 40, from operation information acquired by the operation information acquiring means 110.

That is, as described above, a conventional printing data creating means performs a rendering process for receiving a printing instruction from the user and converting the document data into raster image data. However, the printing data creating means 120 according to the present embodiment acquires document data from operation information acquired sequentially in the operation information acquiring means 110. Subsequently, before a document editing process is completed by the document operation application software 40, that is, before a clarified printing instruction from the user is made, and after document data is acquired, the printing data creating means 120 performs the rendering process to the acquired document data, as described below.

Moreover, the document operation terminal 10 described in the specification may include a general personal computer (PC) as it is, other than a computer exclusively used for a document operation, only if it comprises an environment allowing the application software 40 of an operation object to be worked or the OS 30 providing such an environment, a computer system to be worked by a software such as the OS 30 or the printer control program 100 according to the present invention, or the like.

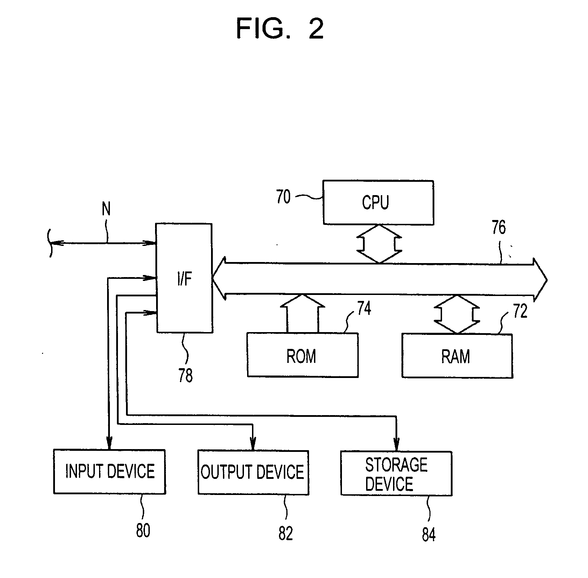

Fig. 2 shows a hardware construction of a computer system constituting the document operation terminal 10.

As shown in Fig. 2, in the document operation terminal 10, a CPU (Central Processing Unit) 70 which is a central arithmetic processing device responsible for various controls or arithmetic processes, a RAM (Random Access Memory) 72 constituting a main storage device (Main Storage), and a ROM (Read Only Memory) 74 which is exclusively used for read are connected to each other via a bus 76. The bus 76 is comprised of a PCI (Peripheral Component Interconnect) bus, an ISA (Industrial Standard Architecture) bus, or the like. In addition, an external storage device (Secondary Storage) 84 which is comprised of, for example, a hard disk drive device (HDD), the input device 80 such as the above-mentioned keyboard or mouse, an output device 72 such as a liquid crystal monitor, a network N for communicating with an external apparatus such as the printer 60, and so on are connected to the bus 76 via an input/output interface (I/F) 78.

Simultaneously with electric power being supplied, a basic program for system such as BIOS (Basic Input Output System) stored in the ROM 74 loads on the RAM 72 various computer programs, such as the OS, the application software 40 and the printer control program 100, which are installed on a storage medium, such as a CD-ROM or DVD-ROM, a flexible disk (FD), or the storage device 84 via the communication network N such as Internet. The CPU 70 performs a predetermined control or arithmetic process by driving various resources according to commands described in the program which is loaded on the RAM 72. As a result, various processes such as the above-mentioned document editing process, the operation information acquiring process and the printing data creating process are performed.

Further, the printer 60 to be connected to the document operation terminal 10 is not specifically limited. As the printer 60 other than a general ink jet printer or a laser printer, an old device such as a thermal printer or a dot printer may be used as it is with no improvement, if it is provided with a basic function of a printing device such as a data receiving means 62 for receiving printing data to be transmitted from the document operation terminal 10 via the network N, and a printing means 64 for performing printing based on the received printing data, as shown in Fig.1.

In addition, as the application software 40 or the OS 30 which works on the above-mentioned hardware, a general product being placed on sale can also be used as it is.

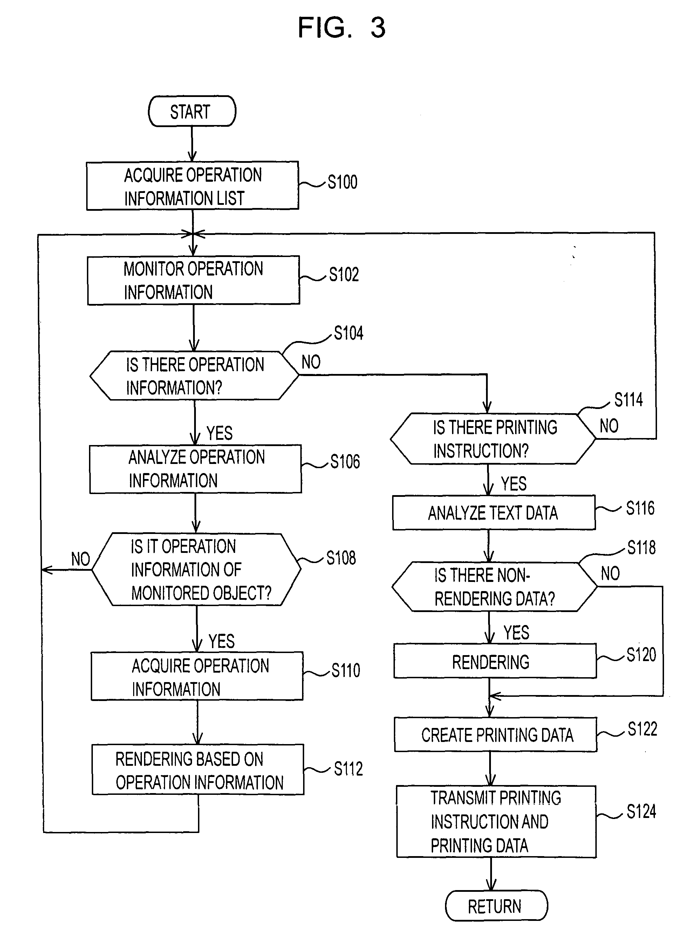

Next, workings of the printer control program 100 provided with such functions according to the present invention will be described mainly with reference to a flowchart of Fig. 3.

First, the printer control program 100 of the present invention is read from the storage device 84 such as the hard disk drive (HDD), together with the OS 30, at the time of the starting of the document operation terminal 10 (at the time of the application of an electric power) and resides on the memory (main storage device) 74. The printer control program 100 monitors operation information of the document operation application software 40 such as a word processor utilizing a printing function of the printer 60. Moreover, the printer control program 100 is not necessary to reside on the memory 74 together with the OS 30. When at least the document operation application software 40 utilizing a printing function of the printer 60 is read and is allowed for the user to utilize, it is enough that the printer control program 100 exists on the memory 74 so as to monitor the document operation application software 40.

Further, as shown in Fig. 3, the printer control program 100 acquires an operation information list of the application software 40 of a monitored object, at an initial step S 100.

That is, as described above, there is so much operation information of the document operation application software 40 of the monitored object and many methods of acquiring operation information. Thus, it is useless to acquire all operation information, and further it is possible to avoid repetitive rendering processes being performed from similar operation information.

Moreover, a plurality of operation information lists in which collected operation information of the monitored object is described is previously prepared (stored) in the storage device 84 or the like. Subsequently, when the document operation application software 40 of the object is determined, it is preferable to select the operation information list, in which optimal operation information is collected, among the plurality of operation information lists. For example, when the API such as GDI or COM (Component Object Model) of Windows (Registered Trademark) is made the object, the operation information list L in which various methods as shown in Fig. 4 are described is prepared.

Next, if the operation information list of the monitored object is acquired by such a manner, the process sequentially shifts to the steps S102 and S104. At the steps S102 and S104, operation information of the application software 40 is monitored.

And then, if it is determined that the generation of operation information is confirmed (Yes), the process shifts to the next step S106. At the step S106, the printer control program 100 (the operation information acquiring means 110) analyzes a type of operation information, that is, checks whether the generated operation information is an object to be acquired or not by comparing the generated operation information with the operation information list (step S108).

As a result of the analysis, if it is determined that generated operation information is operation information of a monitored object described in the operation information list (Yes), the process shifts to the next step S110. At the step S110, operation information is acquired, and then, based on the acquired operation information, the printing data creating means 120 of the printer control program 100 acquires corresponding document data and performs the rendering process (the printing data creating process) by converting the acquired document data into raster image data.

Moreover, raster image data rendered in such a manner is not transmitted to the printer 60, but is temporally stored in the document operation terminal 10 by the printer control program 100 as it is until the clarified printing instruction from the user is made.

Further, after such a rendering process is performed and when it is determined that the generated operation information is not operation information of the monitored object as a result of the analysis at the step S108 (No), the process returns again to the previous step S102. Subsequently, monitoring of operation information of the application software 40 to be sequentially generated continues, and selection of acquiring and discarding the generated operation information is performed.

And then, acquiring operation information of the application software 40 continues until it is determined that operation information is not generated for a constant time at the step S104. If it is determined that operation information is not generated for a constant time (No), it is determined that the document editing process is completed, and the process shifts to the step S114. At the step S114, the printer control program 100 waits for the clarified printing instruction from the user.

At the step S114, it is determined whether the clarified printing instruction from the user is made or not. If it is determined that the printing instruction is made (Yes), actual document data decided simultaneously with the printing instruction is analyzed (step S116) and then is compared with previously rendered document data.

As a result of the analysis of document data, if it is determined that actual document data is data other than previously rendered data, that is, not-rendered data, at the step S 118 (Yes), the process shifts to the step S 120, and then the rendering process is performed to not-rendered data. Meanwhile, if it is determined that there is no not-rendered data (No), the process jump the step S120 as it is and shifts to the next step S122.

The process from the step S116 to the step S120 will be described in detail. For example, the document which the user actually creates using the application software 40 may be made of three text data A, B and C and four image data D, E, F and G. In the case in which operation information to four image data D, E, F and G and text data A and B is previously acquired during the document operation and the rendering process of operation information is previously completed by the printer control program 100, the rendering process to only text data C is performed at the step S120. Further, in the case in which the rendering process to all data is completed prior to the step S116, the process jumps the step S120 as it is and shifts to the step S122. In addition, in the case in which actually acquired document data to which the rendering process is previously completed is removed, a matching process is performed at the step S120.

Further, if the rendering process to all data is completed in such a manner, the process shifts to the step S122. At the step S122, the printer control program 100 (the printing data creating means 120) creates printing data in which additional printing settings regarding a type of printing paper or printing quality are made and transmits the printing instruction and printing data to the corresponding printer 60. If necessary, the printer control program 100 informs the user of the transmitting result. And then, the process is completed.

As described above, the present invention acquires operation information at the time of the document operation during the document operation (edition) of the application software 40 and precedently performs the rendering process to acquired operation information. Thus, it becomes possible to drastically reduce the rendering process time which is conventionally performed after the document operation is completed and the clarified printing instruction from the user is made.

As a result, it is possible to drastically reduce the time up to the first print out in the printer 60, and further it is possible to allow these functions to be exhibited only by improving the printer control program which is a software (the printer control program) for controlling the printer 60. Thus, it is possible to practically use the existing printing system or the general document operation application software as it is. Further, it is possible to suppress the developing cost or developing time to a minimum.

Moreover, in the present embodiment, as an object of operation information to be acquired, as shown in Fig. 1, information regarding input operations between the driver for input device 50 and the OS 30, operation information regarding commands between the OS 30 and the application software 40, or operation information regarding the API between the application software 40 and the OS 30 are exemplified, but the present invention is not limited to such operation information, other operation information, for example, operation information regarding file operations to be executed by the user may be included.

That is, information of the file operations is information regarding content operations which are difficult to be changed, as compared with information of character inputs or the like in which errors are repetitively corrected. Thus, the subject matters obtained by performing the rendering process to information acquired by such a manner are hardly useless, and then it is not necessary to store useless resources in large quantities. Thus, even in the document operation terminal 10 having a relatively scarce information processing ability, it is possible to obtain the above-mentioned effects.

For example, in the case in which operation information of the utilization of the API such as WriteFile or a storing instruction of a certain file by the user from a time stamp state of a file is received, the file is read and rendered. Alternatively, after the certain file is opened, a plotting command may be made thereto. In this case, it is determined that the file is inserted, and then the rendering process may be performed thereto.

Further, the operation information acquiring means 110 may correspond to operation information one by one, or may determine a plurality of operation information unified as a piece of operation information.

For example, operation information of 'plot a green line' is comprised of a plurality of operation information including the selection of 'green' as line color, a type of the line, a plotting from a start point to an end point and so on. Thus, by handling the plurality of operation information as a piece of operation information, it is possible to rapidly determine.

Further, as regards the acquiring method of operation information, by determining differential contents of operation information or by regularly acquiring a copy of a screen from the OS 30 and comparing copy screens with each other, necessary operation information may be acquired.

Further, the operation information acquiring means 110 does not fix types of operation information to be acquired by the setting of the user, but may switch automatically the types of operation information according to the type of the application software 40. For example, as shown in Fig. 1, the operation information selecting means 112 may be used, and a priority over the contents of operation information may be provided by the operation information selecting means 112. And then, subsequent processes such as the creation of operation information may be performed according to the utilization situations of the application software 40. Further, the operation information list to be monitored may be switched. In addition, it is preferable to raise a priority over the document that is highly frequently handled and drop priorities over other documents.

Further, when the rendering process to hooked operation information is performed, the operation information acquiring means 110 may also acquire information regarding a CPU utilization frequency (a CPU load) of the CPU 70 of the hardware and change a type of operation information of the monitored object according to the utilization frequency.

For example, as shown in Fig. 1, CPU load information acquiring means 114 for acquiring load information of the CPU 70 of the hardware constituting the document operation terminal 10 may be provided. As shown in Fig. 5, if the utilization frequency of the CPU 70 is in a range of, for example, 0 to 33 %, all operation information (ReadFile, OleLoadPictureFile, WriteFile, TextOut, MoveToEx, LineTo and Ellipse) regarding the API is monitored. If the utilization frequency of the CPU 70 is in a range of 34 to 66 %, operation information (for example, WriteFile and Ellipse) to which the CPU load is large is excluded from the monitored objects. Further, if the utilization frequency of the CPU 70 is in a ranged of 67 to 100%, operation information (for example, TextOut, MoveToEx, LineTo) to which the CPU load is secondly large is excluded from the monitored objects. As a result, it is possible to avoid an increase of the CPU load due to the acquisition of operation information and the rendering process during the operation.

Further, the operation information acquiring means 110 may perform a process for sensing an order of calling plotting commands or an order which document objects overlap from copies of the screens.

That is, if such a process is provided, the order of the plotting commands or options at the time of plotting is understood, and then it is possible to perform the rendering process to the overlapped characters or figures. As a result, it is possible to prepare data closer to printing data to be transmitted finally to the printer, and it is possible to perform print out at a higher speed.

Further, as regards the rendering process by the printing data creating means 120, attribute values are created from document information and managed in correspondence with rendered contents. And then, it is constructed such that the rendering process is not performed again to the contents having the same attribute value. Thus, it is possible to avoid the repetitive rendering processes. Further, as the objects to be monitored by the operation information acquiring means 110, a system call of the OS 30, an strace command, an ltrace command or an arrangement following these commands may be additionally used.

In addition, as regards printing data to be created, bitmap information, a page descriptive language, reference information thereof or the like may be created, which is actually used at the time of the printing.

Further, in the present embodiment, the printer control program 100 is allowed to reside on the memory 72 of the same computer. However, since, in a distributed environment, the rendering process through the network is possible, the operation information acquiring means 110 or the printing data creating means 120 may not reside on the computer which the OS 30 or the application software 40 utilizes.

Further, the operation information acquiring means 110 and the printing data creating means 120 are provided in a shape of software such as a printer control program referred to as the printer control program 100. Alternatively, the operation information acquiring means 110 and the printing data creating means 120 may be implemented by hardware which is comprised of dedicated logical circuits such as ASIC (Application Specific Integrated Circuit). In this case, generally, it becomes possible to perform the rendering process at a higher speed than those implemented by software.

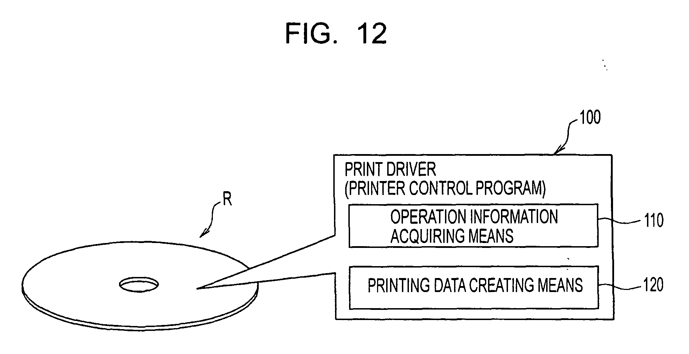

Further, like the conventional art; the printer control program 100 according to the present invention is supplied to the document operation terminal 10 via a recording medium R such as a CD-ROM, as shown in Fig. 12. Alternatively, the printer control program 100 may be supplied via the network N such as an internet. The method for supplying the printer control program 100 is not specifically limited.

Next, a second embodiment of the printer control program 100 according to the present invention will be described.

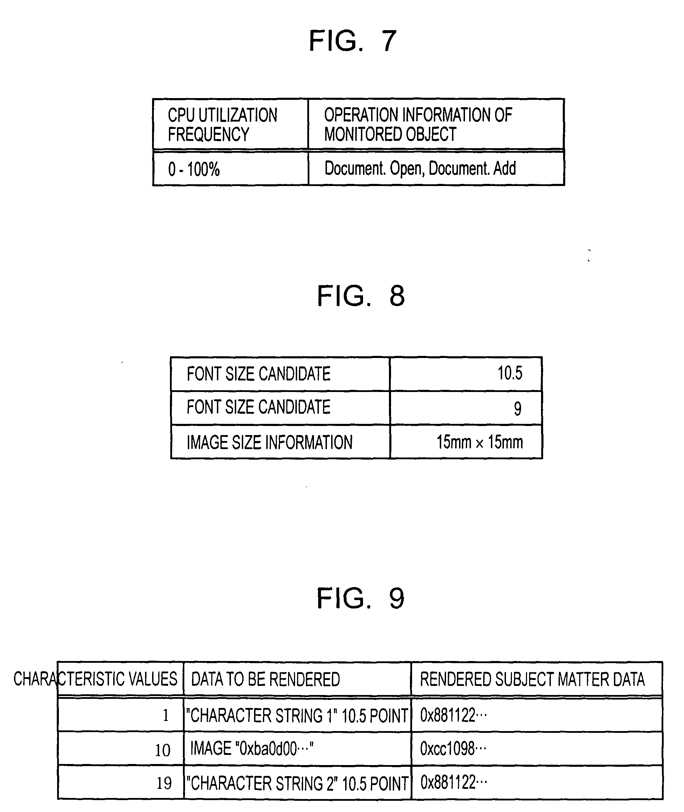

First, Fig. 6 shows examples of operation information of commands to be used in 'Office' (Registered Trademark) of Microsoft Corporation which is one example of document operation application software 40. The operation information such as 'Document. Add (Newly Create)', 'Document.Open (Open Document)' may be acquired. Further, Fig. 7 shows that above-mentioned operation information is an object to be monitored constantly in a range of 0 to 100% of the utilization frequency of the CPU 70.

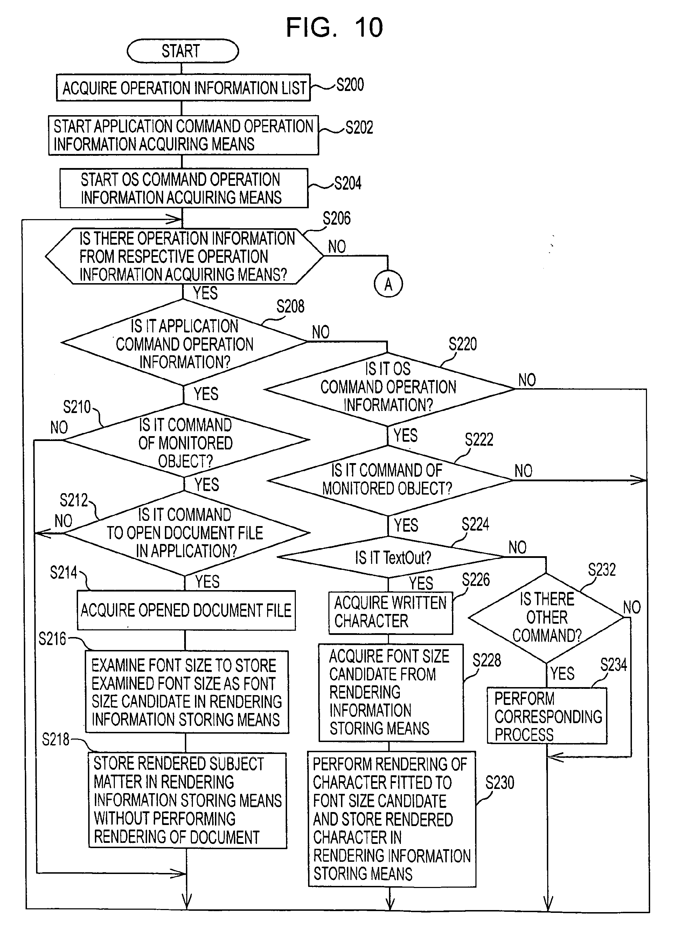

Further, as shown in a flowchart of Fig. 10, in the initial step S200, first, the operation information list regarding 'Windows (Registered Trademark)' command operations as shown in Fig. 4 is acquired, and at the same time, the operation information list regarding 'office' (Registered Trademark) command operations as shown in Fig. 7 (in Fig. 7, referred to as 'application command operations' (hereinafter, the same is applied)) is acquired.

Next, the process sequentially shifts to the step S202 and the step S204, respective operation information acquiring means (corresponding to the above-mentioned operation information acquiring means 110) regarding the 'Windows (Registered Trademark)' command operations (in Fig. 10, referred to as 'OS command operations' (hereinafter, the same is applied)) and the 'office' (Registered Trademark) command operations are started, and the process shifts to the step S206. At the step S206, it is determined whether there is operation information from the respective operation information acquiring means.

As a result of the determination step, if it is determined that there is operation information (Yes), the process shifts to the step S208. At the step S208, it is determined whether operation information is operation information regarding the 'office' (Registered Trademark) command operations or not. If it is determined that operation information is operation information regarding the 'office' (Registered Trademark) command operations (Yes), the process shifts to the next step S210. At the step S210, it is determined whether operation information is the command of the monitored object or not.

In addition, if it is determined that operation information is the command of the monitored object (Yes) at the step S210, the process shifts to the next step S212. At the step S212, it is determined whether the command is the command of opening a document file as shown in Fig. 7 - for example, Document.Open or Document.Add. If it is determined that the command is the command of opening the document file (Yes), the process shifts to the next step S214, at which the opened document file is acquired. Subsequently, the process shirts to the next step S216, at which a font size used in the document file is examined and stored as a font size candidate in the rendering information storing means 116 newly provided as shown in Fig. 1. Subsequently, the process shifts to the next step S218, at which the rendering process to the document is performed, and the subject matters obtained by the rendering process are stored in the rendering information storing means 116.

And then, the process returns above the step S206, at which new operation information is monitored and the same steps thereto are repeated.

Further, if it is determined that it is not the predetermined command (No) in the respective steps S210 and S212, the process jumps the subsequent steps (S214 to S218) and returns above the step S206, at which new operation information is monitored and the same steps thereto are repeated.

Further, at the step S208, if it is determined that acquired operation information is not operation information regarding the 'Office' (Registered Trademark) command operations (No), the process shifts to the step S220 of a branch. Here, it is determined whether operation information is operation information regarding the 'Windows (Registered Trademark)' command operations or not. If it is determined that operation information is operation information regarding the 'Windows (Registered Trademark)' command operations (Yes), the process shifts to the next step S222. At the step S222, it is determined whether operation information is the command of the monitored object or not. If it is determined that operation information is the command of the monitored object (Yes), the process shifts to the step S224. At the step S224, it is determined whether the command of the monitored object is the command regarding 'Text Out' or not. Subsequently, if it is determined that the command of the monitored object is the command regarding 'Text Out' (Yes), the process shifts to the next step S226. At the step S226, characters to be written are acquired, and then the process shifts to the step S228, at which in turn a font size candidate from the rendering information storing means 116 is acquired. Subsequently, the process shifts to the next step S230. At the step S230, the rendering process of the characters to the accompaniment of the font size candidate is performed, and the rendered characters are stored in the same rendering information storing means 116. Subsequently, the process returns above the step S206, at which new operation information is monitored and the same steps thereto are repeated.

Fig. 8 shows an example of storing information regarding the application software 40 of the monitored object. Referring to Fig. 8, two types of the font size candidates of 10.5 point and 9.0 point as a font size candidate to be utilized, and an image of 15 mm x 15 mm as image size information are stored. Further, Fig. 9 shows an example of storing information regarding rendered subject matter data. Referring to Fig. 9, in every subject matter data, a characteristic value, a type of data, an identifier, and so on are described.

Returning to the flowchart of Fig. 10, at the step S224, if it is determined that the command of the monitored object is not the command regarding 'Text Out' (No), the process shifts to other step S232. At the step S232, it is determined whether there is other command or not. If it is determined that there is no other command (No), the process returns above the step S206 as it is. If it is determined that there is other command (Yes), the process shifts to the next step S234. At the step S234, a corresponding process is performed, and then the process returns above the step S206 similarly.

Further, at the steps S220 and S222, if it is determined that there is no predetermined operation information or predetermined command (No), the process returns above the step S206 similarly, at which new operation information is monitored and the same steps thereto are repeated.

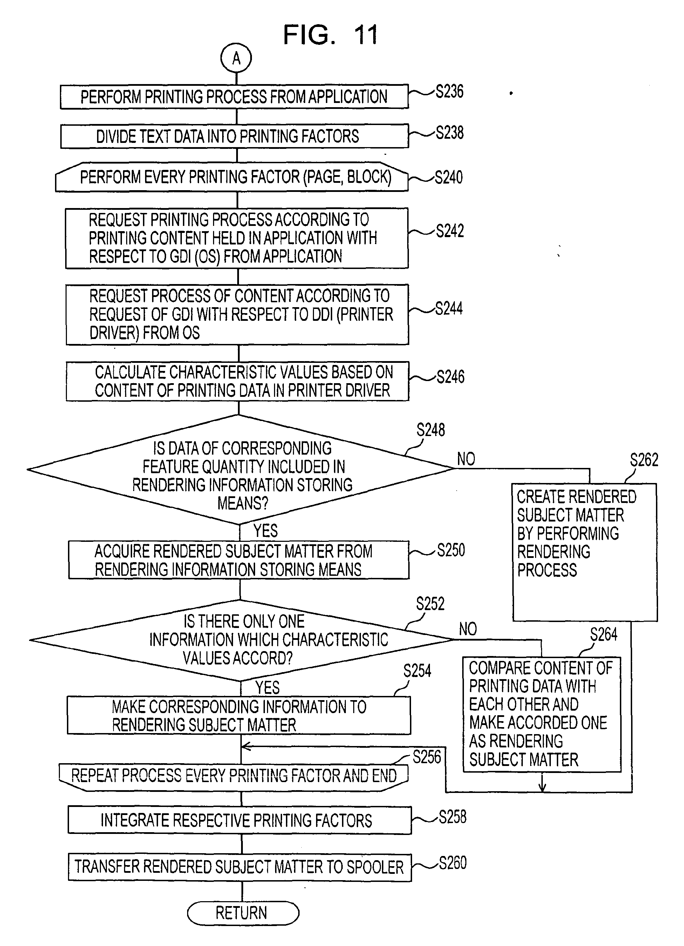

Meanwhile, at the step S206, if it is determined that operation information is not generated for a constant time and there is a printing instruction (No), the process shifts to the step S236 of Fig. 11. At the step S236, it is determined that the clarified printing instruction from the application software 40 (the user) is made. And then, the process shifts to the next step S238, at which document data is divided into printing factors. Subsequently, the process shifts to the next step S240, at which it is determined whether the rendering process to every divided printing factor is performed or not.

That is, first, at the initial step S242 of the loop step S240, a printing process according to the content to be printed stored in the application software 40 with respect to the GDI (Windows (Registered Trademark)) from the application software 40 is requested, and then the process shifts to the next step S244. At the step S244, a process according to the request of the GDI with respect to the DDI (the printer control program) from Windows (Registered Trademark) is requested.

Subsequently, the process shifts to the next step S246, at which characteristic values based on the content of data to be printed are calculated. Next, the process shifts to the next step S248, at which it is determined whether data of corresponding respective characteristic values is included in the rendering information storing means 116 or not. If it is determined that data of corresponding characteristic values is included in the rendering information storing means 116 (Yes), the process shifts to the next step S250. At the step S250, the rendered subject matters from the rendering information storing means 116 are acquired.

In addition, the process shifts to the next determination step S252. At the step S252, it is determined whether there is only one operation information with which the respective characteristic values accord with respect to acquired and rendered subject matter or not. If it is determined that there is only one operation information (Yes), the process shifts to the next step S254, at which the corresponding information is made to the rendering subject matter. And then, the process shifts to the next step S256, at which, similarly, it is determined whether the rendering processes to all the divided printing factors are performed or not.

At the step S248 of the loop process, if it is determined that data of the corresponding characteristic values is not included in the rendering information storing means 116 (No), the process shirts to other step S262, at which the rendering process is actually performed with respect to given data and the rendered subject matter is created. And then, the process shirts to the step S256, at which, similarly, it is determined whether the rendering processes with respect to all of other printing factors are performed or not.

Further, at the above-mentioned step S252, if it is determined that there are two or more operation informations with which the respective characteristic values accord (No), the process shifts to other step S264. At the step S264, data contents to be printed are compared with each other and accorded contents are made as the rendering subject matters. And then, the process shifts to the step S256, at which, similarly, it is determined whether the rendering processes have been performed for all of the other printing factors.

Further, in such a manner, if the rendering processes for all the printing factors are completed, the process shifts to the step S258, at which the respective printing factors are integrated. Subsequently, the process shirts to the step S260, at which the rendered subject matters are transmitted to a spooler. And then, the process is completed.

In a printing framework of Windows (Registered Trademark), the creation of a handle context for the GDI (the preparation of an image region for the printing process) is performed so as to begin when the printing command execution in the application software 40 is made. The respective application software 40 requests a process such as a keying of characters in every page to the GDI. Windows (Registered Trademark) receives the printing process request via the GDI, calls DDI corresponding interfaces for the respective printers and performs the rendering process (if it is an inkjet printer, a binarization is included).

In the printing framework of Windows (Registered Trademark), DrvTextOut for arranging text, DrvBitBlt for deploying the bitmap, and so on are prepared in the DDI interface for the rendering process. Since each printer vendor (a printer supplier) mounts these processes as the printer control program according to the types of the respective printers, it is possible to create an image according to the types of the respective printers. When DrvTextOut or the like is called, the calculation of the characteristic value, for example, the calculation of the hash value of a character string is performed according to the content called by the order of Fig. 11. In addition, by selecting a corresponding object to be rendered which accords to the characteristic value, it is possible to acquire efficiently the rendered subject matters. Thus, the rendering process can be performed simultaneously with the input operations of the user, without adding a specific process for printing in the application software 40. Thus, it becomes possible to make a high-speed first print out.

Moreover, in the present embodiment, 'the document operation means' described in the ninth invention to seventeenth invention corresponds to a means which is comprised of the OS 30, the driver 50 for input device for inputting signals from the input to be operated by the user to the OS 30, and the application software 40 for executing a predetermined document creation actually.

Further, in the example of Fig. 1, the rendering information storing means 116 is made as a part of the function of the operation information acquiring means 110. However, the rendering information storing means 116 may be provided in the printing data creating means 120. Further, if rendered subject matter data to be stored in the rendering information storing means 116 is stored in the storage device 84, such as the HDD, constituting the document operation terminal 10, it is possible to store a large amount of subject matter data. Further, if necessary, it is possible to utilize subject matter data in a moment.

The foregoing description has been given by way of example only and it will be appreciated by a person skilled in the art that modifications can be made without departing from the scope of the present invention.

## Claims

1. A printer control program which works simultaneously with document operation software utilizing a printing function,
wherein a computer is made to function as:
operation information acquiring means for acquiring operation information of the software during the operation of the software; and
printing data creating means for creating printing data of a document to be created in the software, based on the operation information acquired by the operation information acquiring means.

2. A printer control program according to claim 1, wherein the computer is further made to function as:
rendering information storing means for storing respective subject matters of printing data created in the printing data creating means as they are.

3. A printer control program according to claim 1 or claim 2, wherein the computer is further made to function as:
operation information selecting means for selecting predetermined operation information from the operation information acquired by the operation information acquiring means; and
the printing data creating means is for creating the printing data based on the operation information selected by the operation information selecting means.

4. A printer control program according to claim 3, wherein the computer is further made to function as:
CPU load information acquiring means for acquiring load information of a CPU of the computer on which the software runs; and
the operation information selecting means is for selecting predetermined operation based on the load information of the CPU acquired by the CPU load information acquiring means.

5. The printer control program according to any one of Claims 1 to 4,
wherein the software is application software which utilizes an operating system, and the operation information of the software to be acquired by the operation information acquiring means is information regarding operations of the application software to the operating system.

6. The printer control program according to any one of Claims 1 to 4,
wherein the software is application software utilizing an operating system, and the operation information of the software to be acquired by the operation information acquiring means is information regarding command operations from the operating system to the software.

7. The printer control program according to Claim 6,
wherein the information regarding command operations from the operating system to the software is information regarding file operations of the software.

8. The printer control program according to any one of Claims 1 to 7,
wherein the software is application software utilizing an operating system, and the operation information of the software to be acquired by the operation information acquiring means is information regarding input operations from an input device of hardware, with which the software works cooperatively with the operating system.

9. A document operation terminal for communicable connection to a printer, comprising:
document operation means for creating a document to be printed on the printer;
operation information acquiring means for acquiring operation information of the document operation means during the operation of the document operation means;
printing data creating means for creating printing data of the document created in the document operation means, based on the operation information acquired by the operation information acquiring means; and
data transmitting means for transmitting the printing data created in the printing data creating means to the printer.

10. A document processing system comprising a printer and a document operation terminal according to claim 9 for utilizing the printer.

11. A method of creating printing data of a document to be created in document operation software utilizing a printing function,
a step of monitoring a state of the document creation by the software,
a step for acquiring predetermined operation information during the document creation by the software, and
a step of creating in advance printing data of the document in the course of creation in the software based on the acquired operation information before a printing instruction is given.

12. A printer control program which resides in an environment in which document operation application software runs and controls a printer, comprising:
operation information acquiring means for acquiring operation information of the application software during the operation of the application software; and
printing data creating means for creating printing data of a document operated on the document operation application software, based on the operation information acquired by the operation information acquiring means.

13. The printer control program according to Claim 12,
wherein the operation information of the application software to be acquired by the operation information acquiring means is operation information about the environment in which an operating system or the application is used.

14. The printer control program according to Claim 12,
wherein the operation information of the application software to be acquired by the operation information acquiring means is operation information regarding commands for the document operation of the application software.

15. The printer control program according to Claim 12,
wherein the operation information of the application software by the operation information acquiring means is operation information regarding input operations to an input device of hardware, with which the software works cooperatively.

16. The printer control program according to Claim 12,
wherein the operation information of the application software to be acquired by the operation information acquiring means is information regarding file operations of the software.
